# EUROPEAN PATENT APPLICATION

(11) **EP 1 229 554 A1**
(43) Date of publication of application: **07.08.2002**
(21) Application number: 01943872.0
(22) Date of filing: 29.06.2001
(51) Int. Cl.: H01B 7/00, H01B 7/02, H04R 13/00, B23K 1/00, B23K 1/005, B23K 101/36

(54) **COVERED CONDUCTOR, SOLDERING METHOD USING THE COVERED CONDUCTOR, AND ELECTRIC ACOUSTIC CONVERTER**

(30) Priority: 29.06.2000 JP 2000196088
(71) Applicant: MATSUSHITA ELECTRIC INDUSTRIAL CO., LTD., Kadoma-shi, Osaka 571-8501 (JP)
(72) Inventor: AJIKI, Kenichi, Matsusaka, Mie 515-0042 (JP)
(74) Representative: Grünecker, Kinkeldey, Stockmair & Schwanhäusser Anwaltssozietät
(86) International application number: PCT/JP01/05628
(87) International publication number: WO 02/01579

(57) **Abstract**

An enameled wire with an insulating coating film of high laser beam absorption and with a melting layer transparent to the laser beam. The high laser beam absorption makes stripping of the insulating coating layer easy without increasing an output of the laser beam extremely large. As a result, possible wire breakage at soldering can be avoided and soldering reliability improves in assembling the small electro-acoustic transducers. An electro-acoustic transducer of the present invention is provided in the resin-molded body with an empty space in at least a place underneath a portion of soldering land, on which a laser beam is irradiated. Apparatus comprising the electro-acoustic transducer of the present invention can provide a well-stabilized soldering quality and a high reliability.

## Description

### TECHINCAL FIELD

The present invention relates to an enameled wire for use as a coil of small and light-weight electro-acoustic transducer such as a micro speaker, a receiver, a sounder or the like, built in a portable telephone unit or the like mobile communication apparatus. The present invention also includes a method of soldering the wire, as well as an electro-acoustic transducer employing it.

### BACKGROUND ART

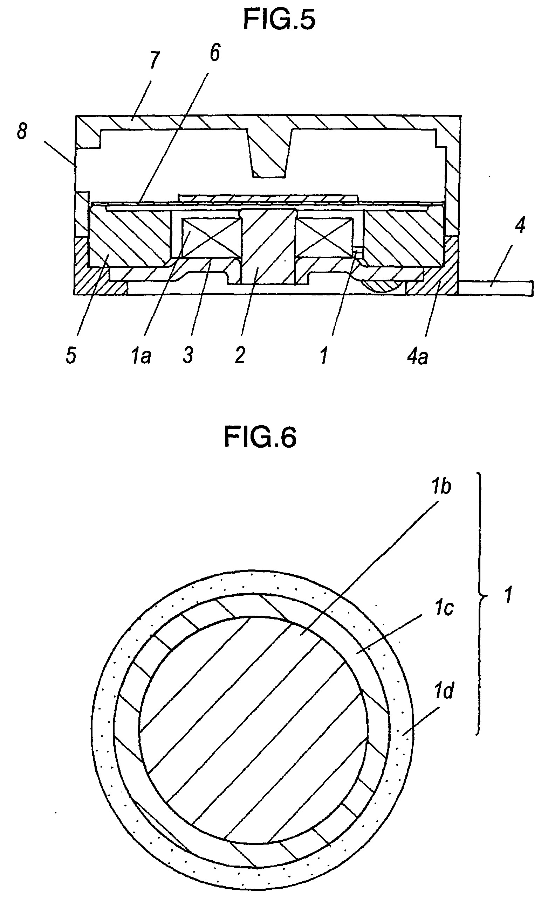

A conventional technology used for manufacturing an electro-acoustic transducer is described with reference to FIG. 5 through FIG. 7.

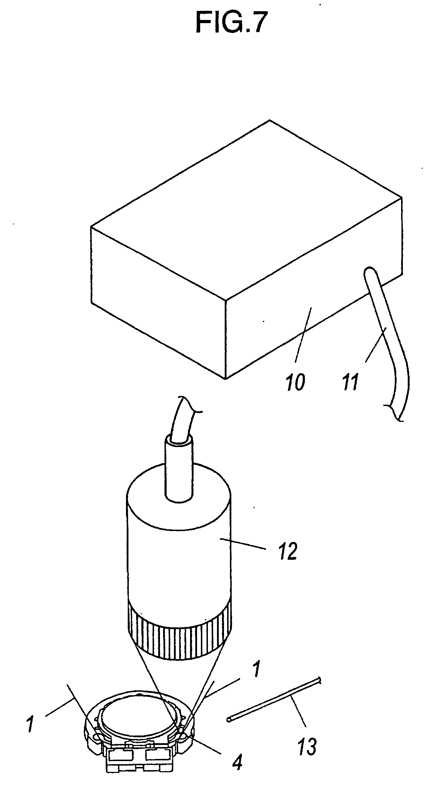

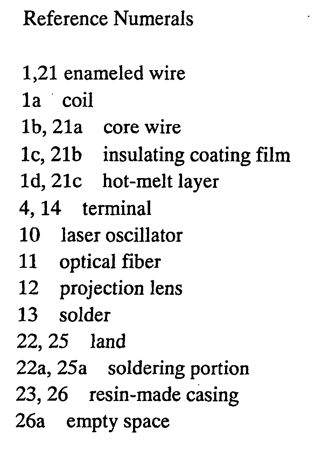

FIG. 5 shows a cross sectional side view of a sounder for use in a mobile communication apparatus. FIG. 6 is a cross sectional view of an enameled wire for forming a coil, which is a key portion of the sounder. FIG. 7 is a perspective view used to describe how enameled wire is soldered by means of laser irradiation.

Referring to FIG. 5, an enameled wire 1 is wound to form a coil 1a disposed on a plate 3 having a center pole 2. A terminal 4 is resin-molded in a bottom case 4a with at least a soldering portion exposed outside. The terminal is provided at the exposed portion with a land for connection with the enameled wire 1. A ring-shaped magnet 5 is fixed on the plate 3. Above the magnet 5 is a diaphragm 6, which is disposed with a certain clearance from the magnet 5. A small piece of magnetic material is attached on the diaphragm 6 at the center. An upper case 7 is provided with a sound radiation hole 8.

Enameled wire 1 constituting the coil 1a is described with reference to FIG. 6. There is a core wire 1b of copper or an copper alloy, which is covered around the outer surface with an insulating film 1c, and a hot-melt layer 1d is covering the insulating film 1c.

During the enameled wire is wound around the center pole 2 for forming the coil 1a, the hot-melt layer 1d is softened or melted by hot air blown thereto, or by other means. When the heating with hot air is stopped, the hot-melt layer 1d solidifies again, and as a result the enameled wire 1 stays in a coiled shape.

The end part of enameled wire 1 forming the coil 1a is soldered to the terminal 4 after the insulating film 1c is stripped.

Generally practiced process of the soldering is; either stripping the insulating film 1c using a CO₂ laser or the like before soldering and then soldering the wire, or conducting the stripping and the soldering at the same time using a laser beam.

A method where the process steps of stripping the insulating film 1c and soldering of the wire are made simultaneously with a laser beam is described below with reference to FIG. 7.

A conventional soldering apparatus consists mainly of a laser oscillator 10, an optical fiber 11, a projection lens 12 and a string solder 13. Laser beam from the laser oscillator 10 is led via the optical fiber 11 to the projection lens 12 to be projected to the outside. The irradiated laser beam is absorbed by the land of terminal 4 and the enameled wire 1, and the beam is converted into thermal energy. When the land of terminal 4 is heated to reach a solder melting temperature, the string solder 13 is delivered thereto. The heat energy provided for soldering removes the hot-melt layer 1d and the insulating film 1c away by melting, evaporation or sublimation, and solders the enameled wire 1 to the land.

In the above-described method of soldering, where the covering film and layer are stripped away prior to soldering, cost of bonding tends to increase because of the increased process step of soldering. In addition, the CO₂ laser used for stripping the insulating film 1c readily oxidizes the land, as a result, the wetting property of the land against solder deteriorates.

While in the method where stripping of insulating film 1c and soldering of wire are conducted simultaneously by laser beam irradiation, since the normally-used core wire 1b of enameled wire 1 is as fine as 0. 1 mm in diameter, the enameled wire 1 easily breaks by a slightly increased output of the laser beam which leads to an excessive generation of heat energy. On the other hand, if the heat energy is insufficient, the insulating film 1c is stripped imperfectly, which tends to cause soldering troubles such as a tunneling solder, or the like.

As described in the foregoing, conventional soldering method using a laser beam has a drawback that it accompanies a precise process control.

The present invention addresses the above problems and aims to provide an enameled wire with which a time needed for laser-soldering a wire on a soldering land can be shortened and a rate of occurrence of the tunneling solder and other soldering troubles can be decreased. The present invention also includes a method of soldering the enameled wire, as well as a soldering apparatus using the enameled wire of the present invention.

### DISCLOSURE OF THE INVENTION

In an enameled wire of the present invention, the insulating coating film is colored for a better absorption of a laser beam, while the hot-melt layer is transparent to the laser beam. When soldering an enameled wire of present invention with a laser beam, the insulating coating film can be stripped away without making output of the laser very high, since an absorption against the irradiated laser beam is high in the insulating coating film. As a result, a trouble of broken enameled wire can be avoided, and the reliability in soldering between the end of enameled wire and the soldering land is improved.

An electro-acoustic transducer of the present invention includes a vacant space provided in a resin molded body at least in a part underneath the soldering land. With an electro-acoustic transducer of the present invention, the efficiency of laser beam utilization increases and soldering quality and the reliability improve.

### BRIEF DESCRIPTION OF THE DRAWINGS

FIG. 1 is a cross sectional view of an enameled wire having an insulating coating film in accordance with an exemplary embodiment of the present invention.
FIG. 2 is a perspective view used to describe a soldering of the enameled wire by laser beam irradiation.
FIG. 3 is a perspective view showing a relationship between size of soldering land and diameter of laser beam spot.
FIG. 4 is a perspective view of a resin-made casing provided in accordance with another exemplary embodiment of the present invention.
FIG. 5 is a cross sectional side view of a conventional sounder.
FIG. 6 is a cross sectional view of a conventional enameled wire.
FIG. 7 is a perspective view used to describe how soldering is made using a laser beam irradiation.

### BEST MODE FOR CARRYING OUT THE INVENTION

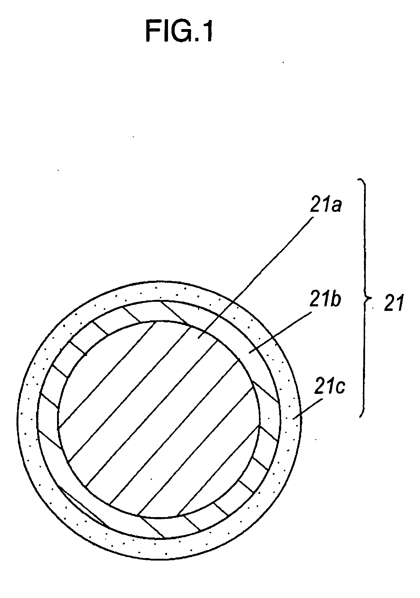

An enameled wire 21 in accordance with the present invention, a method of soldering the enameled wire, as well as the soldering apparatus, are described in the following with reference to FIG. 1 through FIG. 4. The portions using the same conventional technology are represented by the same reference numerals used for the prior art, and descriptions to such portions are omitted. The enameled wire 21 is wound into a a coil through a conventional technology, so description on coiling method is omitted here.

### First Embodiment 1

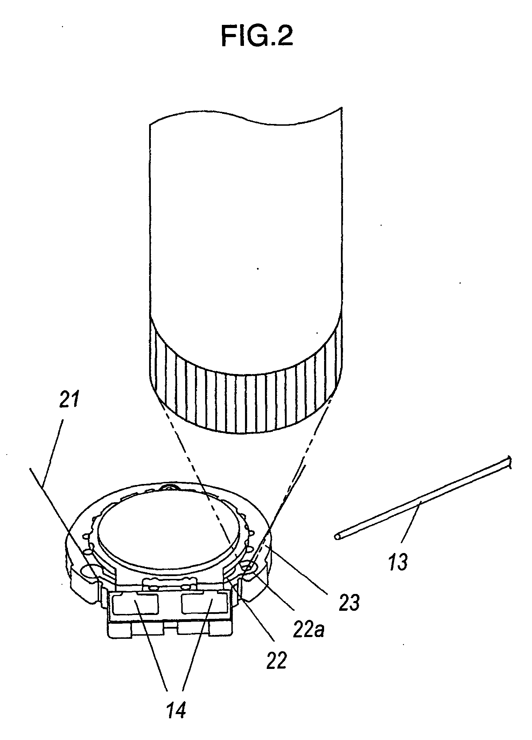

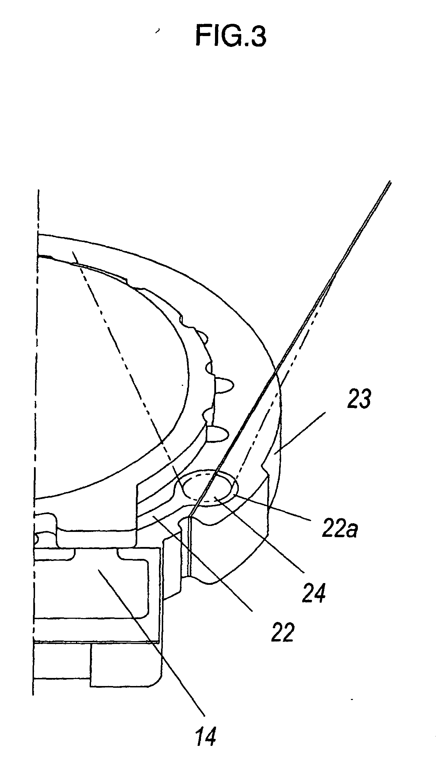

FIG. 1 shows a cross sectional view of an enameled wire manufactured in accordance with an exemplary embodiment of the present invention. FIG. 2 is a perspective view showing how the wire is soldered. FIG. 3 is a perspective view used to show a relationship between size of soldering land and diameter of laser beam spot. These drawings relate mainly to the embodiments relevant to claim 1 through claim 9 of the present invention.

Referring to FIG. 1, an enameled wire 21 comprises a core wire 21a made of copper or a copper alloy, an insulating coating film 21b of colored polyurethane resin covering the outer surface of core wire 21a, and a transparent hot-melt layer 21c covering the outer surface of the insulating coating film 21b.

A method of soldering the above-configured enameled wire 21 on the land of terminal 4 by means of laser irradiation is described referring to FIG. 2.

In FIG. 2, a land 22 is made of a thin metal sheet, and provided with a soldering portion 22a. A resin-made casing 23 is formed integrally with a terminal 4 so that the surface of land 22 is exposed to the outside.

Soldering experiment was conducted with the enameled wire 21 of the present invention using a CO₂ laser under specific laser irradiation conditions. In the experiment, stripping of the insulating coating film 21b and the soldering were done simultaneously. Results of the experiment show that there was no soldering problems (number of samples : N = 300).

Whereas, in the same experiment conducted under the same conditions using a conventional enameled wire, one sample was rejected due to bad soldering (N = 200). Thus it has been confirmed that the connection trouble was eliminated by the use of an enameled wire 21 of the present invention.

Supposed reason for the eliminated soldering trouble is that color of the insulating coating film 21b in the present exemplary embodiment is green, while the insulating film 1c of conventional enameled wire 1 has a color that is transparent to the laser beam. The green-color insulating coating film 21b efficiently absorbed the irradiated laser beam; as a result, it was surely melted and stripped away and the core wire 21a of enameled wire 21 had a good contact with molten solder. This seems to be a reason why the enameled wire 21 and the soldering portion 22a connected in a stable manner.

Although the insulating coating film 21b in the present embodiment has a color green, those blue-colored films also exhibited the same effects. Thus the colors given to the insulating coating film 21b help increasing the absorption of laser beam and heat the film effectively. It seems that an insulating coating film 21b was melted and stripped away thoroughly and the soldering finished well by taking advantage of the above-described factors, without irradiating a high amount of laser beam energy.

An insulating coating film 21b may be colored by any conventional means using a dye or a pigment. The absorption wavelength of such coloring means is not required to be existing within the range of visible lights. Namely, the coloring is effective also to the YAG laser, CO₂ laser or other kinds of laser beams whose oscillation wavelength is not within the range of visible lights. In this case, the insulating coating film should be provided with a coloring means that has an absorption band corresponding to the oscillation wavelength.

Although in the present embodiment a CO₂ laser apparatus was used because of its general availability and a high energy, high output semiconductor lasers may of course be used instead, which oscillate beams in red, green ultraviolet or other colors.

It is to be noted too, that once the melting/stripping is initiated at a part of insulating coating film 21b, the stripped area is expanded by a molten solder, and as a result the soldering can be completed well.

Furthermore, as shown in FIG. 3, when a soldering portion 22a of land 22 is made to have a same shape as that of laser beam spot 24, unwanted heat diffusion can be avoided to obtain a highest heating efficiency. This leads to a shorter soldering time.

Still further, the soldering time can be shortened by making the size of the soldering portion 22a of land 22 approximately identical to that of the laser beam spot 24. Under such a configuration, the heat diffusion can be suppressed and the heating efficiency maximizes.

### Second Embodiment

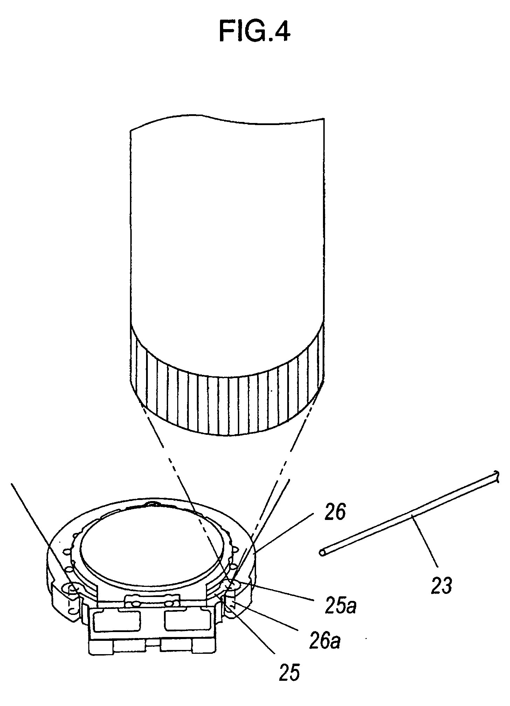

FIG. 4 is a perspective view of a resin case of a receiver provided in accordance with another exemplary embodiment of the present invention. It shows how soldering is made on a soldering land which is made of a thin metal sheet molded in the resin. The drawing relates mainly to claim 10 of the present invention.

Referring to FIG. 4, a resin-made casing 26 is provided with an empty space 26a underneath a soldering portion 25a of land 25. The empty space 26a is provided in order to suppress a diffusion of heat caused by a laser beam spot irradiation into the resin casing 26, and to further increase the efficiency of soldering. The empty space 26a may be penetrating through the resin casing 26 to a bottom surface, in which case, it can be utilized also as a screw hole for fixing.

There can be another means for improving the heating efficiency hence shortening the soldering time. The land 25 may be plated with a solder or tin, or provided with a flux layer on the surface to increase the laser beam spot absorption. By so doing, the reliability of soldering may also be improved.

Though, in the foregoing descriptions only a hot-melt layer of an enameled wire has been explained, it should be noticed that the melting layer is not limited to a hot-melt type. The present invention may employ enameled wires having a melting layer which is softened or glued by a solvent, or a self-adhesive layer can be used for the same purpose. Also, in the foregoing descriptions the hot-melt layers have been described to be transparent to the laser beam spot. However, it is not requested that the layer is totally transparent; but, what is essential is that a hot-melt layer absorbs less laser beam spot relative to an insulating coating film of the wire.

A soldering method in the present invention can be applied on those enameled wires having no melting layer.

### INDUSTRIAL APPLICABILITY

An enameled wire having an insulating coating film in accordance with the present invention can be stripped of the insulating coating film efficiently by a laser beam spot irradiation during soldering process. As a result, the stripping of insulating coating film and the soldering can be conducted simultaneously; that means that the use of an enameled wire of the present invention can shorten a time needed for a soldering work during assembly of an apparatus. Problems due to bad soldering, such as a tunneling soldering, can also be reduced. Thus the enameled wires of the present invention are expected to make a significant contribution in the manufacturing productivity as well as in the reliability of electric devices including the electro-acoustic transducers and the like.

## Claims

1. An enameled wire comprising:
a core wire of copper or a copper alloy;
an insulating coating film covering said core wire; and
a melting layer covering said insulating coating film;
wherein said insulating coating film is formed of a material which absorbs a laser beam.

2. The enameled wire of claim 1, wherein said material absorbing the laser beam is a colored resin.

3. The enameled wire of claim 1, wherein said material is colored with a dye or a pigment.

4. The enameled wire of claim 1, wherein said melting layer is transparent to said laser beam.

5. The enameled wire of claim 1, wherein said melting layer softens or melts by heat.

6. The enameled wire of claim 1, wherein said laser beam is oscillated from one of a CO₂ laser, a YAG laser and a semiconductor laser.

7. A method of soldering an enameled wire comprising the steps of:
irradiating a laser beam to an enameled wire comprising:
a core wire made of copper or a copper alloy;
an insulating coating film covering said core wire, said coating film being made of a material which absorbs the laser beam; and
a melting layer covering said insulating coating film;
stripping at least a part of said insulating coating film by the laser beam; and
soldering said core wire to a soldering portion by the laser beam.

8. The method of soldering an enameled wire of claim 7, wherein said soldering portion has a same shape with that of said laser beam spot.

9. The method of soldering an enameled wire of claim 7, wherein a size of said soldering portion is approximately identical to a diameter of said laser beam.

10. The method of soldering an enameled wire of claim 7, further comprising a step of providing an empty space underneath the soldering portion of a soldering land.

11. An electro-acoustic transducer comprising:
A: a plate having a center pole;
B: a coil disposed on said plate, said coil being formed of an enameled wire comprising a core wire made of copper or a copper alloy metal, an insulating coating film formed of a laser beam-absorbing material covering said core wire and a melting layer covering said insulating coating film;
C: a terminal for connection with said enameled wire molded with a resin with at least a soldering portion exposed outside;
D: a magnet fixed on said plate;
E: a diaphragm disposed above said magnet with a space to said center pole, said diaphragm having a magnetic material disposed thereon; and
F: a resin-mold body having an empty space in at least a part underneath said soldering portion of said terminal.
